# NEUE EUROPÄISCHE PATENTSCHRIFT

(11) **EP 1 549 988 B2**
(45) Veröffentlichungstag und Bekanntmachung des Hinweises auf die Entscheidung über den Einspruch: **05.10.2011**
(45) Hinweis auf die Patenterteilung: 22.03.2006
(21) Anmeldenummer: 03807849.9
(22) Anmeldetag: 08.10.2003
(51) Int. Cl.: G02B 21/06, G02B 25/02, G02B 27/02, F21V 19/02

(54) **BELEUCHTUNGSEINRICHTUNG FÜR EIN OPTISCHES VERGRÖSSERUNGSGERÄT SOWIE OPTISCHES VERGRÖSSERUNGSGERÄT**
ILLUMINATING DEVICE FOR AN OPTICAL MAGNIFYING INSTRUMENT AND OPTICAL MAGNIFYING INSTRUMENT
DISPOSITIF D'ECLAIRAGE POUR UN INSTRUMENT D'AGRANDISSEMENT OPTIQUE ET INSTRUMENT D'AGRANDISSEMENT OPTIQUE

(30) Priorität: 08.10.2002 DE 10246889
(43) Veröffentlichungstag der Anmeldung: 06.07.2005
(73) Patentinhaber: Karl Kaps GmbH & Co KG, 35614 Asslar (DE)
(72) Erfinder: WACHTER, Karl-Heinz, 35641 Schöffengrund (DE); JUNG, Carsten, 35614 Asslar (DE)
(74) Vertreter: DTS München
(86) Internationale Anmeldenummer: PCT/EP2003/011131
(87) Internationale Veröffentlichungsnummer: WO 2004/034123

(56) Entgegenhaltungen:
- EP-A1- 1 150 154
- WO-A-99/62442
- WO-A1-01/61324
- WO-A1-01/98706
- WO-A1-99/62442
- DE-A- 10 017 823
- DE-A- 19 919 096
- DE-A1- 3 418 839
- DE-A1- 10 017 823
- DE-A1- 19 523 712
- DE-A1- 19 650 773
- DE-A1- 19 845 603
- DE-C3- 2 852 203
- DE-U1- 29 824 633
- JP-A- 4 336 444
- JP-A- 9 127 424
- JP-A- 04 336 444
- JP-A- 11 142 746
- JP-A- 2002 008 410
- US-A- 5 690 417
- US-B1- 6 195 203
- PATENT ABSTRACTS OF JAPAN vol. 017, no. 188 (E-1349), 13. April 1993 (1993-04-13) & JP 04 336444 A (ROHM CO LTD), 24. November 1992 (1992-11-24)
- PATENT ABSTRACTS OF JAPAN vol. 1999, no. 10, 31. August 1999 (1999-08-31) & JP 11 142746 A (ITO:KK), 28. Mai 1999 (1999-05-28)
- PRO IDEE - NEUE IDEEN AUS ALLER WELT 2002 Seite 2, 6
- ' Faseroptische Bauteile von SCHOTT-Qualitätsprodukte' SCHOTT GLASWERKE/FASEROPTIK, WIESBADEN Nr. 10031,
- K. MÜTZE, VERLAG WERNER DAUSIEN, HANAU, 1960 ABC DER OPTIK Seiten 143 - 145
- S.R. GAGE, IDATA 84 PROCEEDINGS, INTERN. SYMPOSIUM ON AUTOM.: 'Use of light emitting diodes in automotive indicator 1984' IDATA 84 PROCEEDINGS, INTERN. SYMPOSIUM ON AUTOMOTIVE TECHN Seiten 321 - 334
- PATENT ABSTRACTS OF JAPAN & JP (JP-04-336 444 A)

## Beschreibung

Die Erfindung betrifft eine Beleuchtungseinrichtung für ein optisches Vergrößerungsgerät, insbesondere eine Lupe, ein Diagnose- oder ein Operationsmikroskop, mit einem Objektiv und mindestens einer Leuchtdiode sowie ein optisches Vergrößerungsgerät an sich.

Um bei einer optischen Vergrößerungseinheit ein gutes vergrößertes Bild des zu betrachtenden Objekts zu erhalten, muss das Sehfeld gut ausgeleuchtet sein. Es ist seit langem bekannt, für die Ausleuchtung des Sehfeldes das natürliche Tageslicht oder eine Glühlampe zu verwenden. Um eine gute Ausleuchtung des Sehfeldes zu erzielen, muss die verwendete Lichtquelle zum Einen ausreichend stark sein und zum Anderen eine möglichst homogene Lichtverteilung erzielen. Nur dann kann eine gute vergrößerte Abbildung des Objektes erzielt werden. Bei der Verwendung von Tageslicht ist in der Regel die Intensität der Ausleuchtung nicht ausreichend. Durch die Verwendung einer Glühlampe ist die Intensität der Ausleuchtung des Sehfeldes ausreichend, jedoch hat eine Glühlampe einen relativ hohen Stromverbrauch, was insbesondere bei mobilen Vergrößerungsgeräten als äußerst störend empfunden wird. Es ist dann nötig, entweder eine schwere Stromquelle mitzuführen oder die Stromquelle häufig auszuwechseln. Eine solche Stromquelle ist sehr platzraubend und hat eine hohe elektromagnetische Verträglichkeit.

Das Problem des durch die Verwendung von Glühlampen auftretenden Stromverbrauchs kann durch die Verwendung von Leuchtdioden als Beleuchtungsquelle umgangen werden. Eine solche Verwendung von Leuchtdioden wird beispielsweise in dem deutschen Gebrauchsmuster 298 09 759 U 1 beschrieben. Dabei wird ein Leuchtdiodenarray unter einem Winkel von 5 bis 80 ° zur Beobachtungsrichtung angeordnet. Das Problem bei dieser Anordnung ist, dass eine gleichmäßige und möglichst umfassende Ausleuchtung des Sehfeldes nur dadurch erreicht werden kann, dass ein Diffusor vor dem Leuchtdiodenarray angeordnet wird. Dies führt zu einer Konstruktion, die sehr aufwendig und deswegen teuer zu realisieren ist. Darüber hinaus benötigt eine solche Vorrichtung einen weit größeren Platzbedarf als dies ein Mikroskop oder eine andere Vergrößerungseinrichtung ohne eine solche Beleuchtungseinrichtung benötigt.

Aus der deutschen Offenlegungsschrift DE 100 17 823 A1 ist eine mikroskopische Beleuchtungsvorrichtung bekannt, die als Lichtquelle eine Leuchtdiodenanordnung aus identischen Leuchtdioden in dichter Packung in konzentrischen Ringen aufweist. Mit diesem Leuchtdiodenfeld wird über eine Abbildungsoptik ein Kondensor ausgeleuchtet, der das zur Beleuchtung dienende Licht auf ein Objekt fokussiert. Das von dem Objekt in Transmission ausgehende Licht wird durch ein Objektiv über eine bekannte Optik abgebildet. Nachteilig an einer solchen Ausgestaltung ist es, dass eine relativ große Bauhöhe für die Realisierung nötig ist.

Aus der japanischen Patentanmeldung 11142746 A ist eine Beleuchtungseinrichtung für ein Mikroskop bekannt, die gleichzeitig eine CCD-Kamera zur Aufnahme des Bildes des zu betrachtenden Objekts aufweist. Um die CCD-Kamera herum ist ein Kranz von LEDs angeordnet. Das Licht der LEDs wird mittels eines Prismas auf einen Fokus konzentriert. Bei dem Fokus handelt es sich um den Fokus einer Objektivlinse. Die LEDs liegen auf der objektabgewandten Seite des Objektivs und die Beleuchtung erfolgt durch das Objektiv in axialer Richtung, parallel zur Beobachtungsrichtung. Ein solcher Aufbau ist jedoch aufgrund der vielen Einzelelemente, insbesondere des Prismas, sehr kompliziert.

Aufgabe der vorliegenden Erfindung ist es deswegen, eine Beleuchtungseinrichtung für ein optisches Vergrößerungsgerät zur Verfügung zu stellen, die eine kompakte Bauweise und eine gleichmäßige Ausleuchtung des Sehfeldes bei einer geringen Stromaufnahme ermöglicht.

Die Aufgabe wird durch eine Beleuchtungseinrichtung mit den Merkmalen des Patentanspruchs 1 sowie ein optisches Vergrößerungsgerät mit den Merkmalen des Patentanspruchs 8 gelöst.

Durch die erfindungsgemäße Anordnung des Feldes aus Leuchtdioden um eine Durchbrechung in axialer Richtung, die das Sehfeld des Beobachters begrenzt, auf der objektabgewandten Seite des Objektives und die Ausrichtung der Strahlung der Leuchtdiode in axialer Richtung, d. h. parallel zur Beobachtungsrichtung, wird eine äußerst kompakte Bauweise der Beleuchtungseinrichtung und eine hervorragende und - wegen der Vielzahl der in dem Feld angeordneten Leuchtdioden - intensive Ausleuchtung des ganzen Sehfeldes erzielt. Diese Ausleuchtung des Sehfeldes ist außerdem äußerst homogen, da die Leuchtdioden gleichmäßig um das Sehfeld des Beobachters herum angeordnet sind und ihre Strahlung durch das Objektiv auf das Objekt fällt. Insgesamt wird durch die erfindungsgemäße Beleuchtungseinrichtung demnach ein homogen ausgeleuchtetes Beleuchtungsfeld erzielt, das im Wesentlichen dem Sehfeld entspricht. Durch die Verwendung von Leuchtdioden entstehen auch keinerlei thermische Probleme, da eine Leuchtdiode im Gegensatz zu einer Glühlampe nur eine zu vernachlässigende Wärmemenge abstrahlt. Eine Erhitzung des Objektives oder anderer Bauteile in der Umgebung der Beleuchtungseinrichtung wird somit vermieden. Dadurch, dass das Feld zwei Durchbrechungen in axialer Richtung in der Form sich durchdringender Zylinder aufweist, wird eine sehr einfache Konstruktion für einen Binokulartubus ermöglicht, der sich in bekannter Weise hinter dem Objektiv anschließt. Dadurch ist die Übernahme von schon bekannten Baugruppen eines Binokulartubus problemlos möglich, wobei dadurch Kosten bei der Umrüstung von bekannten Geräten eingespart werden können.

Eine vorteilhafte Weiterbildung der Erfindung sieht vor, dass das Objektiv als ein Achromat oder Apochromat ausgebildet ist. Dadurch wird erreicht, dass die Farb- und Abbildungsfehler einer Einzellinse eliminiert werden.

Eine weitere vorteilhafte Weiterbildung der Erfindung sieht vor, dass die mindestens eine Leuchtdiode auf einer Leiterbahnplatte angeordnet ist, über die die mindestens eine Leuchtdiode mit Strom versorgt wird, wobei die Leiterbahnplatte lösbar mit einem fest mit der Beleuchtungseinrichtung verbundenen Stromversorgungssockel verbunden ist. Dadurch ist es möglich, dass je nach Anwendungsfall die benutzten Leuchtdioden sehr einfach ausgewechselt werden können. Es kann so problemlos zwischen Leuchtdioden beliebiger Farbe, beispielsweise weißen, grünen und blauen, oder auch UV-Leuchtdioden gewechselt werden, ohne dass der Stromversorgungssockel, der mit der Stromversorgung verbunden ist, ausgewechselt werden muss.

Eine weitere vorteilhafte Weiterbildung der Erfindung sieht vor, dass auf der Leiterbahnplatte objektseitig eine Führungsplatte lösbar angeordnet ist, die mindestens eine Durchbrechung in axialer Ausrichtung aufweist und diese mindestens eine Durchbrechung die mindestens eine Leuchtdiode seitlich umschließt. Dadurch wird zum Einen eine mechanisch stabile Führung der mindestens einen Leuchtdiode erreicht, so dass die Verbindung mit der Leiterbahnplatte nicht unbeabsichtigt gelöst wird. Zum Anderen wird durch die Ausrichtung der Durchbrechung in Beobachtungsrichtung die gut definierte Abstrahlrichtung der Leuchtdiode in die gewünschte Richtung, nämlich axial zur Beobachtungsrichtung, stabil ausgerichtet. Bevorzugt ist die Führungsplatte aus Aluminium, schwarzem Kunststoff oder Pertinax gefertigt.

Eine weitere vorteilhafte Weiterbildung der Erfindung sieht vor, dass die mindestens eine Leuchtdiode eine Weißlichtdiode ist. Dadurch wird eine sehr vorteilhafte Fahrtemperatur von 8000 K erreicht, was zu einem tageslichtähnlichem Effekt und einer sehr homogenen Ausleuchtung des Sehfeldes führt.

Eine weitere vorteilhafte Weiterbildung der Erfindung sieht vor, dass die mindestens eine Leuchtdiode in einem gepulsten Betrieb betreibbar ist. Dadurch ist es möglich, dass die Leistung der mindestens einen Leuchtdiode auf ca. das vierfache gegenüber einem Dauerbetrieb erhöht werden kann. Dadurch wird die Intensität der Ausleuchtung des Sehfeldes beträchtlich erhöht, was zu einer bedeutend besseren Wiedergabe des vergrößerten Bildes des Objektes führt.

Eine vorteilhafte Ausgestaltung der Erfindung wird weiter anhand des in den Figuren dargestellten Ausführungsbeispiels erläutert. Hierbei zeigen:
- Fig. 1: eine seitliche Ansicht eines mobilen Handmikroskops mit erfindungsgemäßer Beleuchtungsvorrichtung,
- Fig. 2: schräge Ansicht des Handmikroskops aus Fig. 1,
- Fig. 3: eine vergrößerte Darstellung des Teils des Handmikroskops aus Fig. 1 und 2, in dem die erfindungsgemäße Ausgestaltung der Leuchtdioden angeordnet ist, und
- Fig. 4: eine Explosionszeichnung einer Leiterbahnplatte und darauf angebrachter Leuchtdioden.

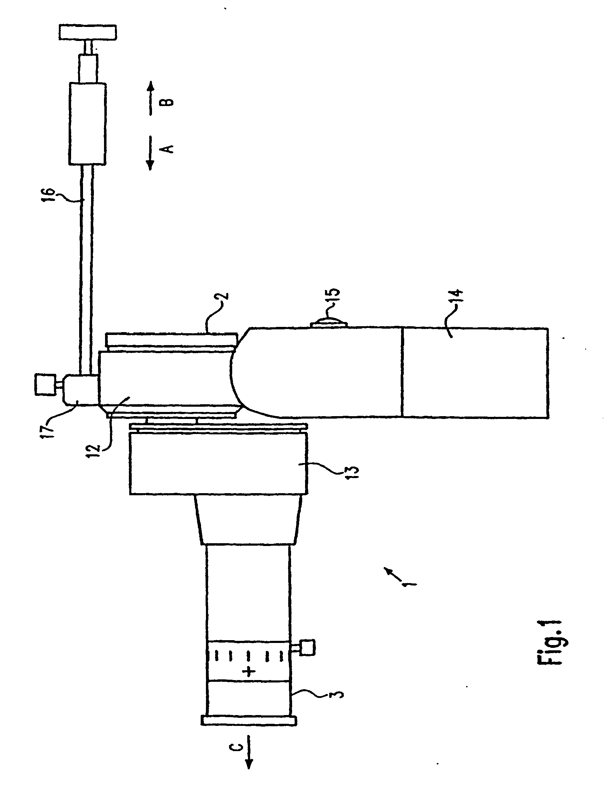

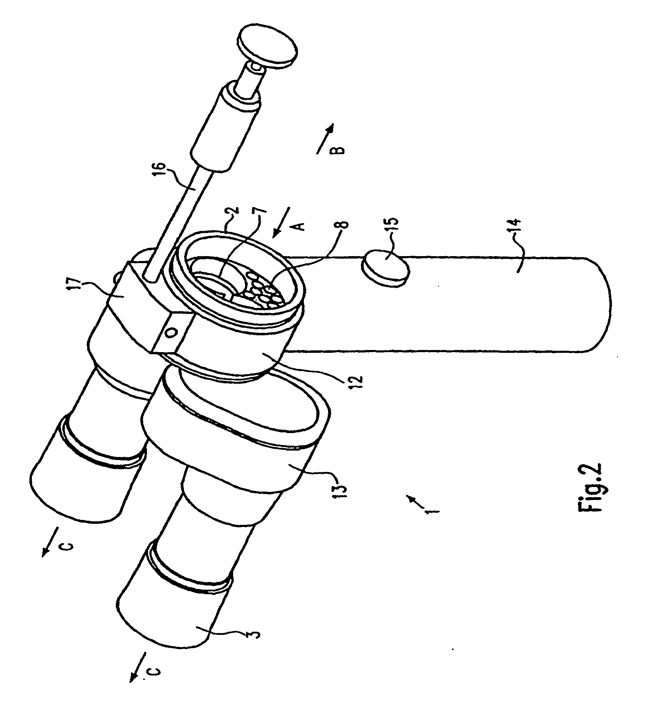

In den Figuren 1 und 2 ist ein erfindungsgemäßes optisches Vergrößerungsgerät 1 aus zwei verschiedenen Blickwinkeln dargestellt. Hierbei handelt es sich um ein mobiles Handmikroskop, das im Folgenden Handlupe 1 genannt wird. Die Ausgestaltung einer Handlupe 1 ist prinzipiell bekannt, so dass die einzelnen Teile nur kurz beschrieben werden und im Folgenden dann lediglich vertieft auf die erfindungsgemäßen Einzelheiten der Beleuchtungseinrichtung eingegangen wird.

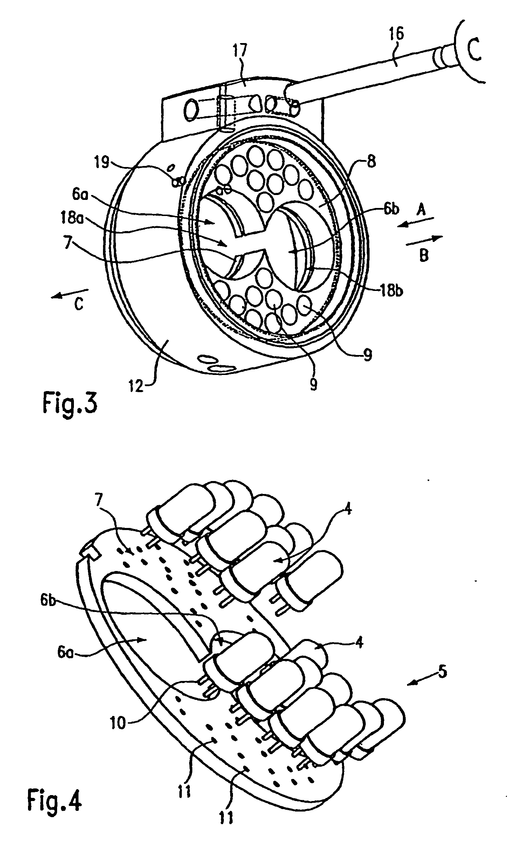

Die Handlupe 1 weist einen Griff 14 auf, mit dem der Beobachter sie bequem halten kann. Am Griff 14 ist ein Taster 15 angeordnet, mit dem die Stromzufuhr aus einer Spannungsquelle zu einer Beleuchtungseinrichtung hergestellt werden kann. Als Stromquelle dienen hier wiederaufladbare Akkumulatoren (nicht gezeigt), die im Griff 14 angeordnet sind. Zur Beleuchtung dienen erfindungsgemäß Leuchtdioden 4 (siehe Figur 4), die in einem Beleuchtungsgehäuse 12 angeordnet sind. Am Beleuchtungsgehäuse 12 ist ein Objektiv 2 lösbar angeordnet. Solche lösbaren Anordnungen sind dem Fachmann bekannt, beispielsweise ein Schraubgewinde oder ein Bajonettverschluss. Im Weiteren wird auf Einzelheiten der lösbaren Verbindung zwischen Objektiv 2 und Beleuchtungsgehäuse 12 nicht näher eingegangen, da diese weder erfindungswesentlich noch für die Ausführung der Erfindung interessant sind.

Da das Objektiv 2 eine fest definierte Brennweite hat, ist am Beleuchtungsgehäuse 12 über eine Verbindungsvorrichtung 17 ein Abstandsstab 16 angeordnet. Dieser ist in seiner Länge auf die Brennweite des Objektivs 2 abgestimmt. Das auswechselbare Objektiv 2 kann beispielsweise eine Brennweite von 100, 122, 150, 200 oder 250 mm haben. Um ein scharfes Bild des zu untersuchenden Objekts (nicht dargestellt) zu erhalten, wird der Abstandsstab 16 so lange gegen das Objekt geführt, bis er an diesem anstößt. Dadurch wird gewährleistet, dass das Objekt vom Objektiv 2 durch einen Okulartubus 3, der sich im Strahlengang hinter dem Objektiv 2 und der Beleuchtungseinrichtung befindet, für den Beobachter scharf abgebildet wird. Der Abstandsstab 16 ist so mit dem Verbindungselement 17 verbunden, dass er festlegbar ist und in axialer Richtung A verschoben oder ganz herausgenommen werden kann, so dass der Beobachter frei ist, mit der Lupe 1 auch näher an das zu beobachtende Objekt heranzugehen, als dies mit dem Abstandsstab 16 möglich wäre. Dies ist beispielsweise dann nötig, wenn sich der zu beobachtende Teil des Objektes in einer Vertiefung befindet und der Abstandsstab am Objekt anstoßen würde, obwohl der für das Objektiv 2 nötige Abstand für eine scharfe Abbildung noch nicht erreicht ist.

Die Beobachtungsrichtung B des Beobachters ist entgegengesetzt ausgerichtet zu der axialen Richtung A des Lichtes, das von dem zu beobachtenden Objekt durch das Objektiv 2 hindurchtritt. Das in das Objektiv 2 einfallende Licht des Objekts wird über zwei Strahlumlenkungen 13 in jeweils zwei Okulartuben 3 umgelenkt und tritt dort in Richtung des austretenden Strahls C in das Auge des Beobachters ein. In die Bildebene der Okulartuben 3 können Strichplatten mit Linien oder Formen eingebaut werden, welche zum Vermessen oder Vergleichen dienen. Diese Strichplatten sind kundenspezifisch wählbar. Eine solche Strahlführung für eine binokulare Beobachtungsanordnung ist allgemein bekannt und wird deswegen nicht im Näheren beschrieben.

In Fig. 3 ist das Beleuchtungsgehäuse 12 mit einer erfindungsgemäßen Anordnung der Beleuchtungseinrichtung zu sehen. Der besseren Darstellbarkeit wegen ist das Objektiv 2, das in den Figuren 1 und 2 im eingesetzten Zustand dargestellt ist, aus dem Beleuchtungsgehäuse 12 herausgenommen. Dadurch ist die Anordnung einer Leiterbahnplatte 7, auf der die Leuchtdioden 4 (siehe Fig. 4) und die Führungsplatte 8 angeordnet sind, sehr gut zu erkennen. Die Führungsplatte 8 verdeckt in Fig. 3 die Leuchtdioden 4, die sich in darauf abgestimmten Durchbrechungen 9 der Führungsplatte 8 befinden.

Die Leiterbahnplatte 7 weist zwei zylinderförmige Durchbrechungen 6a, 6b auf, die in axialer Richtung A zum einfallenden Lichtstrahl ausgerichtet sind und sich in geringem Maße durchdringen. Dadurch wird in der Daraufsicht in axialer Richtung A eine Durchbrechung in Form einer "8" erreicht. Die durch diese Durchbrechungen 6a, 6b hindurchtretenden Lichtstrahlen vom Objekt werden in diesen jeweils zugeordnete Strahlumlenkungen 13 (siehe Fig. 1 und 2) durchgelassen.

Die Leiterbahnplatte 7 ist mit der Führungsplatte 8 lösbar verbunden. Die Führungsplatte 8 weist wie die Leiterbahnplatte 7 zwei zylindrische Durchbrechungen 18a, 18b auf, durch die die vom Objekt in axialer Richtung A kommenden Lichtstrahlen hindurchtreten. Die Durchbrechungen 18a, 18b der Führungsplatte 8 sind hierbei fluchtend zu den Durchbrechungen 6a, 6b der Leiterbahnplatte 7 angeordnet.

Die Führungsplatte 8 weist darüber hinaus ebenfalls in axialer Richtung A zum einfallenden Lichtstrahl eine Reihe von weiteren Durchbrechungen 9 zur Aufnahme der Leuchtdioden 4 (in Fig. 3 nicht zu sehen) auf. Durch die Aufnahme der Leuchtdioden 4 in diesen Durchbrechungen 9 werden die Leuchtdioden 4 mechanisch fixiert. Darüber hinaus findet eine exakte Ausrichtung der Leuchtdioden 4 in axialer Richtung A des einfallenden Lichtstrahls statt. Dies bedeutet, dass die von den Leuchtdioden 4 ausgehenden Lichtstrahlen in der Beobachtungsrichtung B emittiert werden. Da die Leuchtdioden 4 einen sehr gut definierten Abstrahlwinkel aufweisen, ist eine Blendwirkung bei gewissen Anwendungen der Handlupe 1 (beispielsweise am Auge) nahezu ausgeschlossen.

Da sich alle Leuchtdioden 4 hinter dem Objektiv 2 (nicht dargestellt) befinden, erfolgt eine äußerst homogene Ausleuchtung des zu beobachtenden Objekts. Es wird somit ein Beleuchtungsfeld realisiert, das im Wesentlichen dem Sehfeld des Beobachters entspricht.

Die Führungsplatte 8 ist bevorzugt aus Aluminium, schwarzem Kunststoff oder Pertinax gefertigt. Aus solchen Materialien bestehende Führungsplatten 8 sind äußerst einfach und preiswert herzustellen.

Durch die einfache Herausnahme des Objektivs 2 (nicht dargestellt) aus dem Beleuchtungsgehäuse 12 sowie der lösbaren Anordnung der Führungsplatte 8 auf der Leiterbahnplatte 7 kann die Leiterbahnplatte 7 samt den Leuchtdioden 4 (siehe Fig. 4) äußerst einfach ausgewechselt werden. Durch die Fixierung der Leuchtdioden 4 mittels der Führungsplatte 8 sind keine komplexen Befestigungsmittel zwischen den Leuchtdioden 4 und der Leiterbahnplatte 7 nötig. Die Führungsplatte 8 weist an ihrer Unterseite zwei Pins 19 auf, die in zwei Aufnahmeöffnungen in der Leiterbahnplatte 7 eingeführt werden. Die Leiterbahnplatte 7 ist lösbar mit einem Stromversorgungssockel verbunden, der fest mit dem Beleuchtungsgehäuse 12 verbunden ist. Damit kann je nach Anwendung die optimale Art von Leuchtdioden 4 verwendet werden. Ein schnelles Umrüsten der Handlupe 1 von Weißlichtdioden auf grüne, gelbe, bernsteinfarbene, rot-orange, blaue oder auch UV-Leuchtdioden - oder eine Leuchtdiode beliebiger anderer Farbe - ist somit in sehr einfacher Weise und mit wenig Zeitaufwand problemlos möglich.

Durch die einfache Lösbarkeit des Objektivs 2 (siehe Fig. 1 und 2) vom Beleuchtungsgehäuse 12 ist eine einfache Änderung der Brennweite der Handlupe 1 möglich. Beispielsweise können Brennweiten von 100, 122, 150, 200 oder 250 mm verwendet werden.

In Fig. 4 ist die Verbindung zwischen den Leuchtdioden 4 und der Leiterbahnplatte 7 gut zu erkennen. Um die beiden Durchbrechungen 6a, 6b in der Leiterbahnplatte 7 herum sind insgesamt 18 Leuchtdioden 4 in insgesamt zwei Feldern 5 angeordnet, wobei das eine Feld 5 oberhalb der beiden Durchbrechungen 6a, 6b und das andere Feld 5 darunter angeordnet ist. Jede Leuchtdiode 4 weist zwei Kontaktfüße 10 auf, die in einfacher Art und Weise in dazugehörige Kontaktöffnungen 11 in der Leiterbahn 7 eingelötet sind, um die Leuchtdioden 4 mit Strom zu versorgen. Eine solche Ausgestaltung entspricht dem Medizinproduktegesetz sowie der Elektromagnetischen Verträglichkeit, so dass keine Prüfung notwendig ist.

Zusammenfassend lässt sich sagen, dass eine erfindungsgemäße Ausgestaltung einer Beleuchtungseinrichtung, wie beispielsweise in dem oben beschriebenen Ausführungsbeispiel, bei einer sehr geringen Stromaufnahme von ca. 20 mA eine sehr gute Ausleuchtung des Sehfeldes bewirkt. Bei geeigneter Wahl der Leuchtdioden 4 wird aufgrund der hohen Farbtemperatur ein tageslichtähnlicher Effekt erzeugt. Durch Pulsen der Leuchtdioden 4 kann sogar eine Lichtleistung erzeugt werden, die viermal höher ist als bei einem Dauerbetrieb. Diese Leistung reicht aus, damit das Sehfeld ausreichend hell erleuchtet ist, um dem Betrachter ein scharfes, gut wahrnehmbares und vergrößertes Bild des Objekts darzustellen. Durch die Anordnung der Leuchtdioden 4 hinter dem Objektiv 2 und die axial zur Beobachtungsrichtung B abstrahlenden Leuchtdioden 4 wird ein sehr homogen ausgeleuchtetes Sehfeld erreicht. Darüber hinaus wird durch die Anordnung der Leuchtdioden 4 hinter dem Objektiv 2 noch eine äußerst kompakte Bauform der Handlupe 1 erreicht. Durch die Verwendung von Leuchtdioden 4 wird ein hoher Wirkungsgrad und damit ein geringerer Energieverbrauch bei äußerst geringer Wärmeentwicklung erzielt. Damit wird eine Reduzierung von Klimatisierungskosten erreicht, was insbesondere für den OP-Bereich sehr interessant ist. Da die Leuchtdioden 4 eine nahezu unbegrenzte Lebensdauer haben, fallen keine Wartungs- und Reinigungskosten an. Die Leuchtdioden 4 können unterschiedlich angeordnet werden, wodurch eine individuelle Formbarkeit des Leuchtmittels erzielt wird. Darüber hinaus ist ein Dimmen der Beleuchtung ohne Änderung der Lichttemperatur möglich. Es ist auch möglich, die Lichtfarbe zu regeln, wenn entweder verschiedenfarbige Leuchtdioden 4 oder durchstimmbare Leuchtdioden 4 verwendet werden.

Aus dem geringen Einsatz von Ressourcen und einem geringen Energiebedarf im Betrieb ergeben sich signifikante Vorteile in ökologischer Hinsicht.

Eine erfindungsgemäße Vorrichtung ist stoß- und vibrationsfest, was insbesondere im Bereich der Fahrzeugtechnik von großem Interesse ist, kann nicht implodieren und ein plötzlicher Ausfall ist so gut wie ausgeschlossen. Eine präzise Lichtlenkung kann ohne zusätzliche Reflektoren oder andere Hilfsmittel, wie beispielsweise Diffusoren erreicht werden. Darüber hinaus ist eine solche Anordnung brumnnfrei und strahlt kaum im infraroten Bereich ab, so dass sie kaum Wärme abstrahlt. Falls keine UV-Leuchtdioden verwendet werden, strahlt eine erfindungsgemäße Beleuchtungseinrichtung auch nicht im ultravioletten Bereich.

Es sind keine Lampenfassungen nötig, was ökologisch positiv und außerdem auch ökonomisch vorteilhaft ist, da der Aufbau einer solchen Vorrichtung gegenüber dem Stand der Technik stark vereinfacht ist. Für den Betrieb der Leuchtdioden 4 ist lediglich eine sehr geringe Spannung nötig, was zur Sicherheit des Beobachters beiträgt. Darüber hinaus sind Leuchtdioden 4 praktisch trägheitslos schalt- und modulierbar und weisen eine äußerst gute Farbwiedergabe auf.

Sämtliche vorgenannte Vorteile treffen nicht nur für eine in den Figuren dargestellte Handlupe 1 zu, sondern für jegliche optische Vergrößerungsgeräte. Die erfindungsgemäße Beleuchtungseinrichtung ist deswegen genauso gut in einem Diagnose- oder Operationsmikroskop einsetzbar, egal ob dieses im Betrieb an einer Wand, einer Decke oder auf einem Stativ vorgesehen ist. Insbesondere kann die erfindungsgemäße Beleuchtungseinrichtung in eine Spaltlampe oder ein Iris-Mikroskop eingebaut werden, da (wie oben ausgeführt) kaum Blendungswirkung an dem zu untersuchenden Objekt auftreten.

Die erfindungsgemäße Beleuchtungseinrichtung umfasst eine Vielzahl von Anwendungsmöglichkeiten. Ohne abschließend zu sein, gehören dazu folgende Gebiete:

Qualitätssicherung von der Prototypen- bis zur Serienprüfung, Leiterplattenprüfung, Werkzeugtechnik, Gold- und Silberhandwerk, Funk- und Hochfrequenztechnik, Automobiltechnik, Kunst-Restaurantionsbetriebe (Gemälde), Prüfung von Briefmarken, Geldscheinen und Münzen, Mobiles Diagnose HNO Mikroskop, Fußpflege, Haarverpflanzung, Wafertechnik, Chipherstellung, Optikherstellung und Gynäkologie.

### BEZUGSZEICHENLISTE

- 1: Optisches Vergrößerungsgerät; Lupe
- 2: Objektiv
- 3: Okulartubus
- 4: Leuchtdiode
- 5: Feld von Leuchtdioden
- 6a, 6b: Durchbrechung der Leiterbahnplatte
- 7: Leiterbahnplatte
- 8: Führungsplatte
- 9: Durchbrechung für Leuchtdiode
- 10: Kontaktfuß der Leuchtdiode
- 11: Kontaktöffnung der Leiterbahnplatte
- 12: Beleuchtungsgehäuse
- 13: Strahlumlenkung
- 14: Handgriff
- 15: Taster
- 16: Abstandsstab
- 17: Verbindungselement
- 18a, 18b: Durchbrechung der Führungsplatte
- 19: Pin
- A: Axiale Richtung
- B: Beobachtungsrichtung
- C: Austretendes Licht

## Patentansprüche

1. Beleuchtungseinrichtung für ein optisches Vergrößerungsgerät (1), insbesondere eine Lupe, ein Diagnose- oder ein Operationsmikroskop,
mit einem Objektiv (2) zur Abbildung des Lichts eines zu untersuchenden Objekts und einem Feld (5) aus Leuchtdioden (4), das auf der objektabgewandten Seite des Objektivs (2) angeordnet ist und in axialer Richtung (A), parallel zur Beobachtungsrichtung (B), durch das Objektiv (2) strahlt,
wobei
das Feld (5) mindestens eine Durchbrechung (6a; 6b) in axialer Richtung (A) aufweist, die das Sehfeld des Beobachters begrenzt und um die herum die Leuchtdioden (4) angeordnet sind,
und das Feld (5) zwei Durchbrechungen (6a; 6b) in axialer Richtung (A) in der Form sich durchdringender Zylinder aufweist.

2. Beleuchtungseinrichtung nach Anspruch 1,
**dadurch gekennzeichnet, dass**
das Objektiv (2) als ein Achromat oder Apochromat ausgebildet ist.

3. Beleuchtungseinrichtung nach einem der vorstehenden Ansprüche,
**dadurch gekennzeichnet, dass**
die mindestens eine Leuchtdiode (4) auf einer Leiterbahnplatte (7) angeordnet ist, über die die mindestens eine Leuchtdiode (4) mit Strom versorgt wird, wobei die Leiterbahnplatte (7) lösbar mit einem fest mit der Beleuchtungseinrichtung verbundenen Stromversorgungssockel verbunden ist.

4. Beleuchtungseinrichtung nach Anspruch 3,
**dadurch gekennzeichnet, dass**
auf der Leiterbahnplatte (7) objektseitig eine Führungsplatte (8) lösbar angeordnet ist, die mindestens eine Durchbrechung (9) in axialer Ausrichtung (A) aufweist und diese mindestens eine Durchbrechung (9) die mindestens eine Leuchtdiode (4) seitlich umschließt.

5. Beleuchtungseinrichtung nach Anspruch 3 oder 4,
**dadurch gekennzeichnet, dass**
die Führungsplatte (8) aus Aluminium, schwarzem Kunststoff oder Pertinax ist.

6. Beleuchtungseinrichtung nach einem der vorstehenden Ansprüche,
**dadurch gekennzeichnet, dass**
die mindestens eine Leuchtdiode (4) eine Weißlichtdiode ist.

7. Beleuchtungseinrichtung nach einem der vorstehenden Ansprüche,
**dadurch gekennzeichnet, dass**
die mindestens eine Leuchtdiode (4) in einem gepulsten Betrieb betreibbar ist.

8. Optisches Vergrößerungsgerät (1), insbesondere mobile Vergrößerungslupe, Diagnose- oder Operationsmikroskop, auch für den Betrieb an einer Wand, einer Decke, auf einem Tisch oder einem Stativ,
mit einer Beleuchtungseinrichtung,
einer Stromversorgung für diese Beleuchtungseinrichtung
und einem Okulartubus (3),
**dadurch gekennzeichnet, dass**
die Beleuchtungseinrichtung nach einem der vorstehenden Ansprüche ausgebildet ist und das Feld (5) aus Leuchtdioden (4) zwischen dem Objektiv (2) und dem Okulartubus (3) angeordnet ist.

## Claims

1. Illumination apparatus for an optical enlarger (1), in particular a magnifying glass, a diagnosis or an operation microscope,
with an objective (2) for imaging the light of an object to be examined and an array (5) of light-emitting diodes (4) which is arranged on the side of the objective (2) facing away from the object and irradiates through the objective (2) in viewing direction (B) parallel to axial direction (A),
wherein
the array (5) has at least one opening (6a; 6b) in axial direction (A), limiting the viewer's visual field and around which the light-emitting diodes (4) are arranged,
and the array (5) has two openings (6a; 6b) in axial direction (A) in the form of interpenetrating cylinders.

2. Illumination apparatus according to claim 1,
**characterized in that**
the objective (2) is developed as an achromatic objective or apochromatic objective.

3. Illumination apparatus according to one of the previous claims,
**characterized in that**
the at least one light-emitting diode (4) is arranged on a printed circuit board (7) via which the at least one light-emitting diode (4) is powered, the printed circuit board (7) being releasably connected to a power socket fixedly connected to the illumination apparatus.

4. Illumination apparatus according to claim 3,
**characterized in that**
releasably arranged object-side on the printed circuit board (7) is a guide plate (8) which has at least one opening (9) in axial alignment (A) and this at least one opening (9) laterally encloses the at least one light-emitting diode (4).

5. Illumination apparatus according to claim 3 or 4,
**characterized in that**
the guide plate (8) is made of aluminium, black plastic or Pertinax.

6. Illumination apparatus according to one of the previous claims,
**characterized in that**
the at least one light-emitting diode (4) is a white-light diode.

7. Illumination apparatus according to one of the previous claims,
**characterized in that**
the at least one light-emitting diode (4) can be operated in a pulsed operation.

8. Optical enlarger (1), in particular mobile magnifying glass, diagnosis or operation microscope, also for operation on a wall, on a ceiling, on a table or stand,
with an illumination apparatus,
a power supply for this illumination apparatus,
and an ocular tube (3),
**characterized in that**
the illumination apparatus is developed according to one of the previous claims and the array (5) comprising light-emitting diodes (4) is arranged between the objective (2) and the ocular tube (3).

## Revendications

1. Dispositif d'éclairage pour un instrument d'agrandissement optique (1), notamment une loupe, un microscope de diagnostic ou d'opération,
doté d'un objectif (2) pour représenter la lumière provenant d'un objet à examiner et d'un champ (5) composé de diodes électroluminescentes (4) disposées du côté de l'objectif (2) situé du côté opposé à l'objet et rayonnant à travers l'objectif (2) dans la direction d'observation (B), parallèlement à la direction axiale (A),
le champ (5) présentant au moins un passage (6a ; 6b) dans la direction axiale (A) qui limite le champ de vision de l'observateur et est disposé tout autour des diodes électroluminescentes (4),
et le champ (5) présentant deux passages (6a ; 6b) dans la direction axiale (A) prenant la forme de cylindres se chevauchant.

2. Dispositif d'éclairage selon la revendication 1, **caractérisé en ce que** l'objectif (2) est configuré comme un objectif achromatique ou comme un objectif apochromatique.

3. Dispositif d'éclairage selon l'une quelconque des revendications précédentes, **caractérisé en ce qu'**au moins une diode électroluminescente (4) est disposée sur une plaque conductrice (7) via laquelle l'au moins une diode électroluminescente (4) est alimentée en courant, la plaque conductrice (7) étant reliée de façon amovible à un socle d'alimentation en courant relié au dispositif d'éclairage.

4. Dispositif d'éclairage selon la revendication 3, **caractérisé en ce qu'**une plaque de guidage (8) est disposée de façon amovible sur la plaque conductrice (7) du côté de l'objet, laquelle présente au moins un passage (9) pratiqué dans la direction axiale (A) et que ce au moins un passage (9) comprend en côté l'au moins une diode électroluminescente (4).

5. Dispositif d'éclairage selon la revendication 3 ou 4, **caractérisé en ce que** la plaque de guidage (8) est fabriquée en aluminium, en plastique noir ou en pertinax.

6. Dispositif d'éclairage selon l'une quelconque des revendications précédentes, **caractérisé en ce que** l'au moins une diode électroluminescente (4) est une diode de lumière blanche.

7. Dispositif d'éclairage selon l'une quelconque des revendications précédentes, **caractérisé en ce que** l'au moins une diode électroluminescente (4) peut fonctionner en mode pulsé.

8. Appareil d'agrandissement optique (1), notamment loupe d'agrandissement mobile, microscope de diagnostic ou d'opération, pouvant également être utilisé sur un mur, un plafond, sur une table ou sur un support,
avec un dispositif d'éclairage,
une alimentation en courant pour ce dispositif d'éclairage
et un tube oculaire (3),
**caractérisé en ce que** le dispositif d'éclairage est configuré selon l'une quelconque des revendications précédentes et que le champ (5) se compose de diodes électroluminescentes (4) disposées entre l'objectif (2) et le tube oculaire (3).
